# EUROPÄISCHE PATENTSCHRIFT

(11) **EP 3 911 843 B1**
(45) Veröffentlichungstag und Bekanntmachung des Hinweises auf die Patenterteilung: **28.01.2026**
(21) Anmeldenummer: 19832157.2
(22) Anmeldetag: 30.12.2019
(51) Int. Cl.: F01D 25/28, B64F 5/40, B64F 5/60, F01D 25/36

(54) **VORRICHTUNG ZUM ANTRIEB EINER WELLE EINES STRAHLTRIEBWERKS ZU INSPEKTIONSZWECKEN**
DEVICE FOR DRIVING A SHAFT OF A JET ENGINE FOR INSPECTION PURPOSES
DISPOSITIF D'ENTRAÎNEMENT D'UN ARBRE DE MOTEUR À RÉACTION POUR L'INSPECTION

(30) Priorität: 14.01.2019 DE 102019100823
(43) Veröffentlichungstag der Anmeldung: 24.11.2021
(73) Patentinhaber: Lufthansa Technik AG, 22335 Hamburg (DE)
(72) Erfinder: PETERS, Jan Oke, 22339 Hamburg (DE); THIES, Michael, 22395 Hamburg (DE); POTT, Johann, 21255 Wistedt (DE)
(74) Vertreter: Glawe, Delfs, Moll
(86) Internationale Anmeldenummer: PCT/EP2019/087156
(87) Internationale Veröffentlichungsnummer: WO 2020/148081

(56) Entgegenhaltungen:
- WO-A1-2018/234681
- CA-A1- 3 010 368
- DE-U1- 202013 005 524
- US-A- 4 446 728

## Beschreibung

Die Erfindung betrifft eine Vorrichtung zum Antrieb einer Welle eines Strahltriebwerks zu Inspektionszwecken.

Strahltriebwerke von Flugzeugen müssen regelmäßig inspiziert werden, um die Einhaltung der technischen Sicherheitsanforderungen zu überprüfen und evtl. Beschädigung frühzeitig zu erkennen. Insbesondere für Inspektionen während das Strahltriebwerk am Flugzeug montiert ist (on-wing), werden seitliche Klappen am Strahltriebwerk geöffnet und/oder einzelne Bauteile entfernt, sodass ein Techniker unmittelbar oder mit Hilfe eines Boroskops ins Innere des Strahltriebwerks blicken kann.

Zur Inspektion des drehbaren Teils des Strahltriebwerkes ist es weiterhin bekannt, dieses so an einer Sichtöffnung des Strahltriebwerks oder an einem in das Strahltriebwerk eingeführten Boroskop vorbeizuführen, dass nacheinander der gesamte Umfang des drehbaren Teils des Strahltriebwerkes an der Sichtöffnung oder dem Blickfeld des Boroskops vorbeigeführt wird. Selbstverständlich ist es auch möglich, den drehbaren Teil des Strahltriebwerks so zu verfahren, dass ein vorgegebener Abschnitt des drehbaren Teils durch die Sichtöffnung oder das Boroskop einsehbar ist.

Um denjenigen drehbaren Teil des Strahltriebwerks, der die Fanblades sowie wenigstens eine Niedrigdruckturbinenstufe umfasst, zu inspizieren, sind regelmäßig zwei Techniker erforderlich. Der eine Techniker überprüft durch ein Boroskop nacheinander die einzelnen Turbinenschaufeln der fraglichen Turbinenstufen, während der andere Techniker die einzelnen Turbinenschaufeln durch Drehen der damit drehfest verbundenen Fanblades am Boroskop vorbeiführt. Nachteilig hieran ist, dass für die Inspektion der genannten Turbinenschaufeln zwei Arbeitskräfte gebunden sind.

Die CA 3 010 368 A1 betrifft ein Turbinentriebwerk, bei dem ein externer Triebwerkswellenantrieb vorgesehen ist, der per Reibschluss auf einen Spinner des Triebwerks einwirkt.

Aus der WO 2018/234681 A1 ist ein System bekannt, mit dem der Rotor einer Turbine in Rotation versetzt werden kann. Das System umfasst einen Tragarm, einen an dem Tragarm befestigten Elektromotor und ein Rad, das mit einer Welle des Elektromotors gekoppelt ist und an der Innenwand des Turbinengehäuses angelegt werden kann, wenn der Tragarm an einer Turbinenschaufel montiert ist.

Bei US 4 446 728 A handelt es sich um eine Antriebsvorrichtung zum Drehen von Turbinenschaufeln eines Strahltriebwerks zu Inspektionszwecken, bei der ein Reibrad angetrieben wird, das auf der Gehäuseinnenseite des Triebwerks abrollt. Die Vorrichtung wird mittels eines Klemmelements so an einem seitlich hervortretenden Bereich der Triebwerksschaufel angeordneten Abstandshalter ("half-vane shroud") befestigt, dass das Reibrad durch ein zwischen Antriebseinheit und Klemmelement angeordnetes Federelement an das Gehäuse angedrückt wird.

Der Erfindung liegt die Aufgabe zugrunde, eine Vorrichtung zu schaffen, mit der die im Stand der Technik bekannten Nachteile vermieden oder zumindest reduziert werden können.

Gelöst wird diese Aufgabe durch Vorrichtungen gemäß dem Hauptanspruch. Vorteilhafte Weiterbildungen sind Gegenstand der abhängigen Ansprüche.

Die Erfindung wird durch die Ansprüche definiert. Aspekte dieser Beschreibung, die nicht unter die Ansprüche fallen, dienen nur der Erläuterung und sind nicht Teil der Erfindung.

Demnach betrifft ein Aspekt der Beschreibung eine Vorrichtung zum Antrieb einer Welle eines Strahltriebwerks zu Inspektionszwecken umfassend eine Antriebseinheit mit einem mit der Welle mitrotierenden Teil, wobei der mitrotierende Teil der Antriebseinheit zum Anliegen an den Spinner ausgebildet und mit wenigstens einem Gurtband an einem oder mehreren Fanblades drehfest gesichert ist.

Die Erfindung betrifft eine Vorrichtung zum Antrieb einer Welle eines Strahltriebwerks zu Inspektionszwecken umfassend eine Antriebseinheit mit einem Klemmelement zur lösbaren und zerstörungsfreien Befestigung der Antriebseinheit an einem Fanblade des Strahltriebwerks und einem durch die Antriebseinheit angetriebenen Reibrad, welches zum Anliegen an das Gehäuse des Strahltriebwerks ausgebildet ist, wobei ein Federelement zum Andrücken des Reibrades an das Gehäuse des Strahltriebwerks und zwischen Klemmelement und Federelement ein arretierbares Kugelgelenk zur Einstellung der relativen Lage von Klemmelement und Federelement vorgesehen ist.

Die Erfindung hat erkannt, dass das Drehen derjenigen Welle eines Strahltriebwerks, an der die Fanblades des Triebwerks angeordnet sind, durch eine geeignete Vorrichtung erreicht werden kann. Durch Drehen dieser Welle werden auch damit unmittelbar oder über ein Getriebe verbundene Komponenten des Strahltriebwerks, wie z. B. die Turbinenschaufeln einer Stufe einer Niedrigdruckturbine, in Rotation versetzt. Die fraglichen Komponenten können so, wie beschrieben, inspiziert werden. Dabei liegt der Erfindung die Erkenntnis zugrunde, dass eine geeignete Vorrichtung - um deutliche Vorteile gegenüber dem Stand der Technik zu bieten - handlich und einfach in der Handhabung sein muss. Eben dies wird durch die erfindungsgemäßen Vorrichtungen erreicht.

Zunächst werden einige in Zusammenhang mit der Erfindung verwendete Begriffe erläutert.

Mit "Strahltriebwerk" ist ein auf dem Prinzip einer Gasturbine basierendes Flugzeugtriebwerk bezeichnet. Insbesondere umfasst der Begriff Mantelstromtriebwerke, bei denen die eigentliche Gasturbine von einem äußeren Luftstrom ummantelt ist, wobei der äußere Luftstrom durch den sog. "Fan" des Triebwerks beschleunigt wird, der eine Vielzahl von "Fanblades" umfasst. Der Fan kann ummantelt oder in der sog. Open-Rotor-Bauweise ausgeführt sein. Auch ein Propellerturbinenluftstrahltriebwerk (Turboprop) ist ein Strahltriebwerk im Sinne der vorliegenden Erfindung, wobei die einzelnen Schaufelblätter des Propellers aus Gründen der Übersichtlichkeit in Zusammenhang mit der Erfindung ebenfalls als Fanblades bezeichnet werden.

Der Begriff "Gurtband" ist weit zu verstehen. Er umfasst jegliche Form von Bändern und Seilen, die eine zur Verwendung bei der Vorrichtung gemäß einem Aspekt der Beschreibung ausreichende Flexibilität aufweisen.

Mit "Spinner" ist die stromlinienförmige Verkleidung der Welle des Strahltriebwerks am Triebwerkseinlass bezeichnet.

In einer ersten Ausführungsform umfasst die Vorrichtung gemäß einem Aspekt der Beschreibung eine Antriebseinheit, die sich in einen mit der Welle des Strahltriebwerks mitrotierenden Teil und einen nicht-mitrotierenden Teil unterteilt. Die Antriebseinheit ist dabei so ausgebildet, dass sich die beiden Teile der Antriebseinheit relativ zu einander antreiben lassen, dass sich eine relative Rotationsbewegung zwischen den beiden Teilen ergibt.

Der mitrotierende Teil der Antriebseinheit ist zum Anliegen an den Spinner ausgebildet. Ist die Vorrichtung für einen bestimmten Strahltriebwerkstyp ausgestaltet, kann der mitrotierende Teil der Antriebseinheit eine an die Form des Spinners dieses Strahltriebwerkstyps angepasste Negativform aufweisen. Es ist dann eine formschlüssige Anlage der Vorrichtung möglich. Soll die Vorrichtung für verschiedene Strahltriebwerkstyp verwendet werden können, kann der mitrotierende Teil der Antriebseinheit eine oder mehrere kleinere Anlageflächen aufweisen, die derart gestaltet und/oder verstellbar sind, dass eine Anlage an möglichst viele verschiedene Strahltriebwerkstypen möglich ist.

Der mitrotierende Teil der Antriebseinheit wird über wenigstens ein Gurtband an einem oder mehreren Fanblades drehfest gesichert. In anderen Worten soll der mitrotierende Teil so an der Welle des Strahltriebwerks befestigt sein, dass sich im Wesentlichen keine relative Rotationsbewegung zwischen dem mitrotierenden Teil der Antriebseinheit und der Welle des Strahltriebwerks ergibt.

Eine entsprechende Befestigung kann erfolgen, wenn das wenigstens eine Gurtband mit einem Ende an dem mitrotierenden Teil der Antriebseinheit befestigbar oder unmittelbar befestigt ist, und es am anderen Ende ein Hakenelement zum Einhaken an einem Fanblade aufweist. Mit dem Hakenelement kann das Gurtband an die Hinterkante eines Fanblades eingehakt werden und so die bei der gewünschten drehfesten Sicherung im Gurtband auftretenden Zugkräfte aufnehmen.

Alternativ ist es möglich, dass das wenigstens eine Gurtband mit beiden Enden an dem mitrotierenden Teil der Antriebseinheit befestigbar ist. Dabei kann bevorzugt das eine Ende des Gurtbandes fest mit der Antriebseinheit verbunden sein, womit dann nur das andere Ende des Gurtbandes ein freies Ende ist. Das Gurtband kann um ein Fanblade herumgeführt und mit seinen beiden Enden an dem mitrotierenden Teil der Antriebseinheit befestigt werden. Auch hier ergibt sich eine drehfeste Sicherung des mitrotierenden Teils der Antriebseinheit.

Auch wenn die Sicherung mit einem Gurtband in Einzelfällen bereits ausreichend sein kann, ist bevorzugt, wenn zwei, drei oder vier Gurtbänder zur drehfesten Sicherung des mitrotierenden Teils der Antriebseinheit vorgesehen sind. Durch eine entsprechende Anzahl an Gurtbändern lässt sich im Regelfall eine zuverlässig drehfeste Sicherung erreichen, wobei gleichzeitig der Aufwand der Befestigung der Vorrichtung am Strahltriebwerk ausreichend gering gehalten wird. Für eine lösbare Befestigbarkeit eines Gurtbandes am mitrotierenden Teil der Antriebseinheit kann bspw. ein Haken an der Antriebseinheit zum Eingriff in eine Öse im Gurtband vorgesehen sein.

Es ist insbesondere durch geeignete Anordnung mehrerer Gurtbänder zwischen mitrotierendem Teil der Antriebseinheit und Fanblades grundsätzlich möglich, allein durch Gurtbänder eine ausreichend drehfeste Sicherung des mitrotierenden Teils der Antriebseinheit an der Welle des Strahltriebwerks zu erreichen. Es ist jedoch bevorzugt, die zum Anliegen an den Spinner vorgesehene Kontaktfläche des mitrotierenden Teils der Antriebseinheit mit einer die Haftung erhöhenden Oberflächenbeschichtung zu versehen. Dadurch kann die eine drehfeste Sicherung fördernde Haftreibung zwischen dem mitrotierenden Teil der Antriebseinheit und dem Spinner erhöht werden, wobei die für die Haftreibung relevante Normalkraft in erster Linie über die Gurtbänder erreicht wird. Alternativ kann zwischen dem mitrotierenden Teil der Antriebseinheit und des Spinners ein die Haftung erhöhendes Element, bspw. in Form einer über den Spinner stülpbaren Kappe, vorgesehen sein. Die die Haftung erhöhende Oberflächenbeschichtung oder das die Haftung erhöhende Element können bspw. aus Elastomer, vorzugsweise auf Kautschukbasis, sein.

Damit die erfindungsgemäße Vorrichtung und insbesondere die Antriebseinheit ein letztendlich zur Rotation der Welle des Strahltriebwerks führende Drehmoment aufbringen kann, ist es erforderlich, dass der nicht-mitrotierende Teil der Antriebseinheit ortsfest - also nicht beweglich - ist oder zumindest ein geeignetes Gegenmoment aufbringen kann.

In einer ersten Ausführungsvariante ist vorgesehen, dass der nicht-mitrotierende Teil der Antriebseinheit ein Gestänge, vorzugsweise ein Teleskopgestänge zur Abstützung an dem Gehäuse des Strahltriebwerkes aufweist. Durch ein entsprechendes Gestänge kann der nicht-mitrotierende Teil der Antriebseinheit ortsfest und damit u. a. auch drehfest gegenüber dem Gehäuse des Strahltriebwerks gesichert werden. Eine relative Drehung der beiden Teile der Antriebseinheit zueinander hat dann unmittelbar eine Drehung der Welle des Strahltriebwerks zur Folge.

Das Gestänge kann dabei fest mit der Antriebseinheit verbunden sein. Es ist aber bevorzugt, wenn das Gestänge lösbar an der Antriebseinheit befestigbar ist. Die Vorrichtung lässt sich dann regelmäßig kleiner zusammenlegen, wodurch der Transport der Vorrichtung erleichtert wird. Auch ist es möglich, dass - sofern das Gestänge aus Standardteilen besteht - zu einem entfernten Einsatz der Vorrichtung lediglich die Antriebseinheit ggf. mit dem wenigstens einen Gurtband zu transportieren ist und auf ein vor Ort vorhandenes Gestänge aus entsprechenden Standardteilen zurückgegriffen werden kann.

In einer alternativen Ausführungsvariante ist an dem nicht-mitrotierenden Teil der Antriebseinheit ein Auslegerarm für ein Kontergewicht vorgesehen, welches zur Aufbringung eines Momentes auf die Welle geeignet ist. Bspw. kann ein entsprechendes Kontergewicht an dem freien Ende des Auslegers befestigt sein, sodass sich bei jeder Auslenkung des Auslegers aus der Lotrechten ein auf die Welle des Strahltriebwerkes wirkendes Drehmoment ergibt. Es ist auch möglich, zwei Kontergewichte jeweils an den Enden einer zentrisch gelagerten Traverse als Ausleger vorzusehen, sodass sich durch das Herausbewegen des Auslegers aus der Horizontalen ein Drehmoment auf die Welle des Strahltriebwerks ergibt. Selbstverständlich sind noch andere Ausführungsvarianten von Ausleger und Kontergewicht denkbar. Unabhängig von der letztendlichen Ausführung des Auslegers gilt jedoch, dass eine Auslenkung des Auslegers grundsätzlich durch eine relative Rotation der beiden Teile der Antriebseinheit zueinander und aufgrund des Trägheitsmoments der Welle des Strahltriebwerks erreicht wird.

Das Kontergewicht kann integraler Bestandteil der Vorrichtung sein. Es ist jedoch bevorzugt, wenn das Kontergewicht derart austauschbar gestaltet ist, dass ein am jeweiligen Einsatzort der Vorrichtung bereits vorhandenes Gewicht oder sonstige Masse als Kontergewicht genutzt werden kann. Es ist auch möglich, dass das Kontergewicht als Aufnahmebehälter für Flüssigkeit - bspw. als Flüssigkeitssack - ausgestaltet ist, wobei sich die letztendlich erforderliche Masse durch ein wahlweises Füllen des Aufnahmebehälters mit Flüssigkeit, wie bspw. Wasser, erreicht wird.

Es ist bevorzugt, wenn die Vorrichtung einen Winkelgeber zur Ermittlung des Winkels des mitrotierenden Teils der Antriebseinheit gegenüber dem nicht-mitrotierenden Teil der Antriebseinheit aufweist. Es kann weiterhin eine Steuerungseinheit vorgesehen sein, die zum Anfahren einer vorgegebenen Winkelposition über die Antriebseinheit ausgebildet ist. In anderen Worten soll die Steuerungseinheit so ausgebildet sein, dass ihr eine Winkelposition vorgegeben wird und die Steuerungseinheit diese dann durch entsprechende Rotation und anschließendes Wiederabbremsen der Welle des Strahltriebwerks anfährt. Diese Steuerungseinheit und/oder eine zusätzliche Regelungseinheit sind vorzugsweise weiterhin dazu ausgebildet, bei der Ausführungsvariante mit Auslegerarm evtl. auftretende Rotationsschwingungen durch geeignetes Auslenken des Auslegerarms zu dämpfen.

In einer zweiten Ausführungsform umfasst die erfindungsgemäße Vorrichtung zum Antrieb einer Welle eines Strahltriebwerks zu Inspektionszwecken eine Antriebseinheit mit einem Klemmelement zur lösbaren und zerstörungsfreien Befestigung der Antriebseinheit an einer Fanblade des Strahltriebwerks und einem durch die Antriebseinheit angetriebenen Reibrad, welches zum Anliegen an dem Gehäuse des Strahltriebwerks ausgebildet ist. Die Antriebseinheit ist bei dieser Ausführungsform an einer drehfest an der Welle angeordneten Fanblade befestigt und ermöglicht die gewünschte Rotation der Welle, indem ein an dem Gehäuse des Strahltriebwerks entlanglaufendes Reibrad angetrieben wird.

Das Klemmelement umfasst vorzugsweise drei in einem Dreieck angeordnete Punktklemmen. Die jeweils zwei Klemmbacken der Punktklemmen können dabei bspw. an gegenüberliegenden Seiten eines U-Profils angeordnet sein. Durch die entsprechende Ausgestaltung lässt sich das Klemmelement variabel an eine beliebige Fanblade-Form anpassen, womit die Vorrichtung äußerst variabel einsetzbar ist. Bei einem entsprechenden Klemmelement ist es ausreichend, wenn die Vorrichtung lediglich an der Eintrittskante eines Fanblade befestigt wird; eine zusätzliche, bspw. an der Hinterkante der Fanblade angreifende Befestigungskomponente ist dann nicht mehr erforderlich. Die Variabilität kann weiter erhöht werden, wenn wenigstens eine der Punktklemmen auf beiden Seiten verstellbare Klemmbacken aufweist.

Um einen ausreichenden Kontakt zwischen Reibrad und Gehäuse des Strahltriebwerks herzustellen, wird das Reibrad mit einem Federelement an das Gehäuse angedrückt. Zwischen Klemmelement und Federelement ist ein arretierbares Kugelgelenk vorgesehen, mit dem die relative Lage von Klemmelement und Federelement eingestellt werden kann. Dadurch kann die Richtung der Anpresskraft des durch das Federelement erreichten Kontakts zwischen Reibrad und Gehäuse des Strahltriebwerks eingestellt werden.

Es ist weiterhin bevorzugt, wenn das Federelement wahlweise im komprimierten Zustand fixiert werden kann, was eine lastfreie Montage der Vorrichtung ermöglicht. Nach erfolgter Montage kann die Fixierung gelöst werden, womit sich das Federelement entspannt und das Reibrad an das Gehäuse des Strahltriebwerks angedrückt wird. Alternativ oder zusätzlich kann auch das Federelement hinsichtlich der Federkraft einstellbar sein.

Es ist auch bevorzugt, wenn die Vorrichtung eine Kupplung zum Anschluss einer externen Stromversorgung aufweist. Bei der Verwendung der erfindungsgemäßen Vorrichtung ist grundsätzlich davon auszugehen, dass sich ein Stromanschluss in der Nähe des Triebwerks befindet, der als Stromversorgung genutzt werden kann. Die Vorrichtung braucht dann keinen eigenen Energiespeicher mehr und kann dementsprechend leichter ausgeführt werden. Es ist aber natürlich nicht ausgeschlossen, dass die Vorrichtung über einen externen mobilen Energiespeicher mit elektrischer Energie über die Kupplung versorgt wird.

Es ist bevorzugt, wenn die Kupplung gegenüber dem Klemmelement drehbar ist, was bspw. mithilfe einer Schleifringanordnung erreicht werden kann. Dadurch wird verhindert, dass sich ein an die Kupplung angeschlossenes Kabel bei Verwendung der Vorrichtung in sich verdreht bzw. verdrillt.

Es ist bevorzugt, wenn die Vorrichtung einen Winkelgeber zur Ermittlung des Winkels der Antriebseinheit gegenüber der Lotrechten aufweist. Weiterhin kann eine Steuerungseinheit vorgesehen sein, die zum Anfahren einer vorgegebenen Winkelposition über die Antriebseinheit ausgebildet ist. In anderen Worten soll die Steuerungseinheit also dazu ausgebildet sein, eine vorgegebene Winkelposition durch geeignete Ansteuerung der Antriebseinheit einzustellen. Die Winkelposition bezieht sich dabei zunächst auf den Winkel der Vorrichtung gegenüber der Lotrechten, kann aber ohne Weiteres in eine beliebig anders definierte Winkelposition der Welle des Strahltriebwerks umgerechnet werden. Häufig ist hierzu lediglich eine konstante Abweichung hinzuzurechnen.

Die Erfindung bietet eine Vorrichtung zum Antrieb einer Welle eines Strahltriebwerks zu Inspektionszwecken, die einfach zu verwenden ist und aufgrund der geringen Komplexität kostengünstig herstellbar ist. Dabei ermöglich die Vorrichtung den Antrieb einer Welle eines Strahltriebwerks zu Inspektionszwecken, ohne dass der Einsatz eines zweiten Technikers zum letztendlichen Drehen der Welle erforderlich wäre. Vielmehr kann bspw. eine Inspektion der Turbinenschaufeln einer Niedrigdruckturbine, die im Stand der Technik regelmäßig zwei Techniker erforderte, nunmehr durch einen einzelnen Techniker durchgeführt werden.

Die Erfindung wird nun anhand vorteilhafter Ausführungsformen unter Bezugnahme auf die beigefügten Zeichnungen beispielhaft beschrieben. Es zeigen:
- Figur 1:: ein erstes Ausführungsbeispiel einer Vorrichtung gemäß einem Aspekt der Beschreibung;
- Figur 2a, b:: ein zweites Ausführungsbeispiel einer Vorrichtung gemäß einem Aspekt der Beschreibung;
- Figur 3:: ein drittes Ausführungsbeispiel einer erfindungsgemäßen Vorrichtung; und
- Figur 4:: ein viertes Ausführungsbeispiel einer erfindungsgemäßen Vorrichtung.

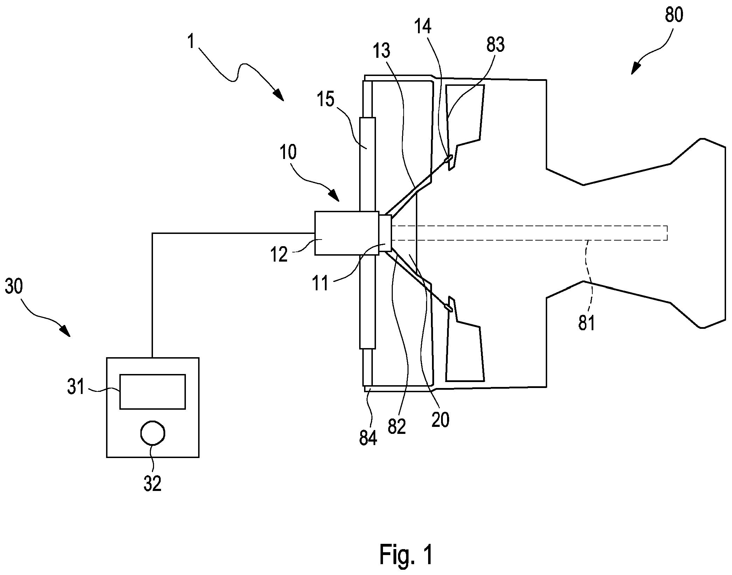

In Figur 1 ist ein erstes Ausführungsbeispiel einer Vorrichtung 1 gemäß einem Aspekt der Beschreibung dargestellt.

Die Vorrichtung 1 ist zum Antrieb derjenigen Welle 81 eines Strahltriebwerks 80 ausgebildet, dessen Spinner 82 der von au-ßen sichtbare sog. Nose-Cone des Strahltriebwerks 80 ist und an der die Fanblades 83 drehfest befestigt sind.

Die Vorrichtung 1 umfasst eine Antriebseinheit 10, mit zwei relativ zueinander rotierbaren Teilen 11, 12, wovon der eine Teil 11 mit der Welle 81 des Strahltriebwerks 80 mitrotiert, der andere Teil 12 hingegen nicht-mitrotiert.

Der mitrotierende Teil 11 ist zur Anlage an den Spinner 82 der Welle 81 ausgebildet und weist hierzu eine auf die Form des Spinners 82 abgestimmte, negativ geformte Anlagefläche auf. Um die Haftung zwischen dieser Anlagefläche und dem Spinner 82 zu erhöhen, ist zwischen dem mitrotierenden Teil 11 der Antriebseinheit 10 und dem Spinner 82 ein die Haftung erhöhendes Element 20 in Form einer über den Spinner 82 stülpbaren Kappe aus einem gummi-artigen Elastomer vorgesehen.

Die Antriebseinheit 10 bzw. der mitrotierende Teil 11 der Antriebseinheit 10 ist über straff gespannte Gurtbänder 13, die an ihrem einen Ende fest an dem mitrotierenden Teil 11 befestigt sind und an dem anderen Ende Hakenelemente 14 aufweisen, die an den Hinterkanten einzelner Fanblades 83 des Strahltriebwerks 80 eingreifen, befestigt. Durch die Gurtbänder 13 und das die Haftung erhöhende Element 20 ergibt sich so eine drehfeste Verbindung zwischen dem mitrotierenden Teil 11 der Antriebseinheit 10 und der Welle 81 des Strahltriebwerks 80.

Der nicht-mitrotierende Teil 12 der Antriebseinheit 10 stützt sich derart über ein Teleskopgestänge 15 an der Innenseite des Gehäuses 84 des Strahltriebwerks ab, dass es gegenüber dem Gehäuse 84 ortsfest ist, gegenüber dem Gehäuse 84 also weder einen Translations- noch einen Rotations-Freiheitsgrad aufweist. Durch Rotation der beiden Teile 11, 12 der Antriebseinheit 10 zueinander, wird so eine Rotation der Welle 81 des Strahltriebwerks 80 erreicht.

Zu Steuerung der Drehbewegung der Welle 81 ist eine Steuerungseinheit 30 vorgesehen, mit der sich die Antriebseinheit 10 steuern lässt. Die Steuerungseinheit 30 erhält dabei von einem in der Antriebseinheit 10 angeordneten Winkelgeber (nicht dargestellt) Informationen zur Winkelposition der beiden Teile 11, 12 der Antriebseinheit 10 zueinander, die - ggf. unter Berücksichtigung einer vorgegebenen konstanten Abweichung - auf einem Display 31 an der Steuerungseinheit 30 angezeigt wird. Über einen Drehregler 32 ist es auch möglich, an der Steuerungseinheit 30 eine gewünschte Winkelposition der beiden Teile 11, 12 der Antriebseinheit 10 zueinander oder ggf. unter Berücksichtigung einer vorgegebenen konstanten Abweichung der Welle 81 des Strahltriebwerks 80 vorzugeben, wobei die Steuerungseinheit 30 dazu ausgebildet ist, die Antriebseinheit 10 zur Erreichung dieser Winkelposition geeignet zu steuern.

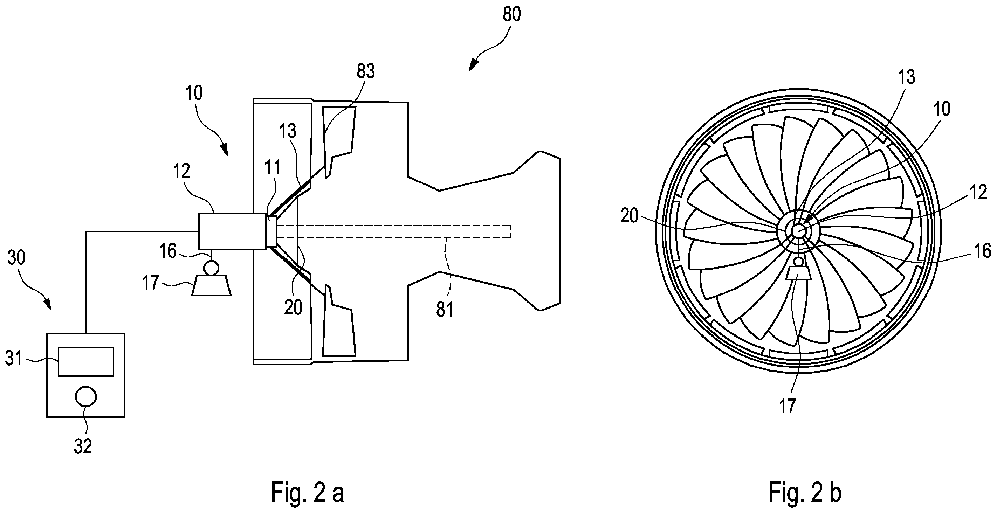

In Figur 2 ist ein zweites Ausführungsbeispiel einer Vorrichtung 1 gemäß einem Aspekt der Beschreibung dargestellt. Auch diese Vorrichtung 1 umfasst eine Antriebseinheit 10, mit zwei relativ zueinander rotierbaren Teilen 11, 12, wovon der eine Teil 11 mit der Welle 81 des Strahltriebwerks 80 mitrotiert, der andere Teil 12 hingegen nicht-mitrotiert.

Zur grundsätzlichen Ausgestaltung des mitrotierenden Teils 11 der Antriebseinheit 10 sowie zu dem zwischen diesem Teil 11 und dem Spinner 82 angeordneten Element 20 wird auf die entsprechenden Ausführungen zu Figur 1 verwiesen.

Auch bei der Vorrichtung 1 gemäß Figur 2 erfolgt die Befestigung des mitrotierenden Teils 11 der Antriebseinheit 10 über Gurtbänder 13. Diese Gurtbänder 13 sind mit ihrem einen Ende fest, mit dem anderen Ende lösbar mit dem fraglichen Teil 11 der Antriebseinheit 10 verbunden, sodass sie, wie dargestellt, schlaufenförmig um einzelne Fanblades 83 des Strahltriebwerks 80 herumgelegt werden können. Durch die straff gespannten Gurtbänder 13 wird - wie in Zusammenhang mit Figur 1 bereits erläutert - eine drehfeste Verbindung zwischen dem mitrotierenden Teil 11 der Antriebseinheit 10 und der Welle 81 des Strahltriebwerks 80 erreicht.

An dem nicht-mitrotierenden Teil 12 der Antriebseinheit 10 ist ein Auslegearm 16 vorgesehen, an dessen freiem Ende ein Kontergewicht 17 befestigt ist. Der Auslegearm 16 ist im dargestellten Ausführungsbeispiel als tatsächlicher Arm dargestellt; es ist aber auch möglich, dass der Auslegearm 16 unmittelbar durch das Gehäuse des nicht-mitrotierenden Teils 12 der Antriebseinheit 10 gebildet ist, bspw. in dem das Kontergewicht 17 abseits der Rotationsachse unmittelbar an dem Gehäuse befestigt ist.

Durch Auslenkung des Auslegearms 16 aus der Lotrechten kann ein Moment auf die Welle 81 des Strahltriebwerks 80 aufgebracht werden, welches letztendlich zur gewünschten Drehung der Welle 81 führt. Die beschriebe Auslenkung kann durch Rotation der beiden Teile 11, 12 der Antriebseinheit 10 zueinander erreicht werden, wobei sich die Trägheit der Welle 81 des Strahltriebwerks 80, an der der mitrotierende Teil 11 drehfest befestigt ist, zunutze gemacht wird.

Die Steuerungsvorrichtung 30 ist analog zu derjenigen aus Figur 1 ausgestaltet, weshalb auf die entsprechenden Ausführungen verwiesen wird. Neben dem bereits beschriebenen Winkelgeber erhält die Steuerungsvorrichtung 30 noch zusätzliche Informationen zur Winkelstellung des Auslegers 16 gegenüber der Lotrechten. Aus diesen Informationen lässt sich eine Winkelstellung der Welle 81 des Strahltriebwerks 80 berechnen und in der Folge auch steuern. Außerdem ermöglichen die genannten Informationen zu Winkelstellung ein Dämpfen evtl. auftretender Rotationsschwingungen, die bspw. beim Abbremsen einer Rotationsbewegung der Welle 81 auftreten können. Die entsprechende Dämpfung wird unmittelbar durch die Steuerungseinrichtung 30 geregelt, indem der Auslegearm 16 entsprechend gegengesteuert wird.

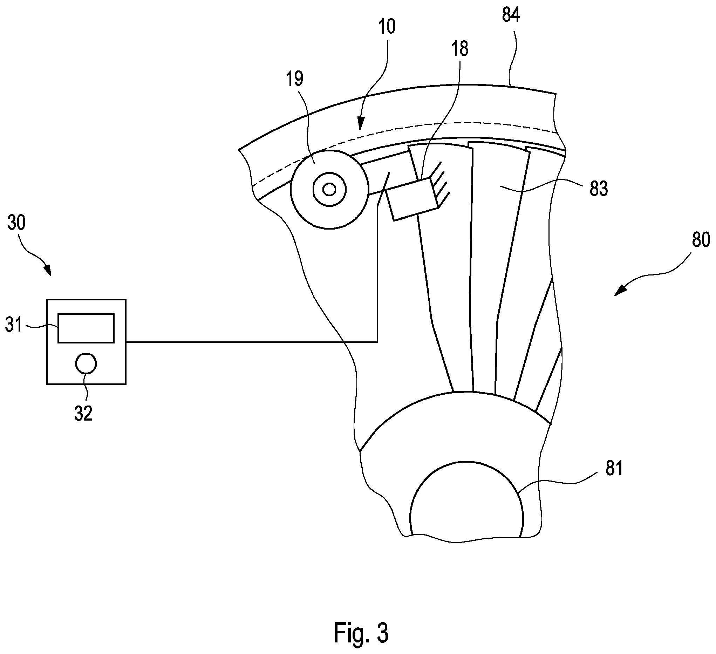

In Figur 3 ist eine weitere erfindungsgemäße Vorrichtung 1 zum Antrieb derjenigen Welle 81 eines Strahltriebwerks 80, dessen Spinner 82 der von außen sichtbare sog. Nose-Cone des Strahltriebwerks 80 ist.

Die Vorrichtung 1 umfasst eine Antriebseinheit 10 mit einem Klemmelement 18, mit der es lösbar und zerstörungsfrei an dem freien Ende eines Fanblades 83 befestigt werden kann. Dass Klemmelement 18 kann alternativ auch zur Klemmbefestigung zwischen zwei benachbarten Fanblades 83 ausgestaltet sein.

Weiterhin umfasst die Antriebseinheit 10 ein Reibrad 19, welches durch ein innen liegendes und daher nicht dargestelltes Federelement an die Innenseite des Gehäuses 84 des Strahltriebwerks gedrückt wird. Durch Antrieb des Reibrades 18 wird eine Drehung der Fanblades 83 und der damit drehfest verbundenen Welle 81 erreicht.

Die Antriebseinheit 10 umfasst einen Winkelgeber (nicht dargestellt), der eine Winkelposition der Antriebseinheit 10 gegenüber der Lotrechten liefert. Diese Information kann von einer Steuerungseinheit 30, wie sie in Zusammenhang mit Figuren 1 und 2 beschrieben wurde, zur Steuerung der Antriebseinheit verwendet werden.

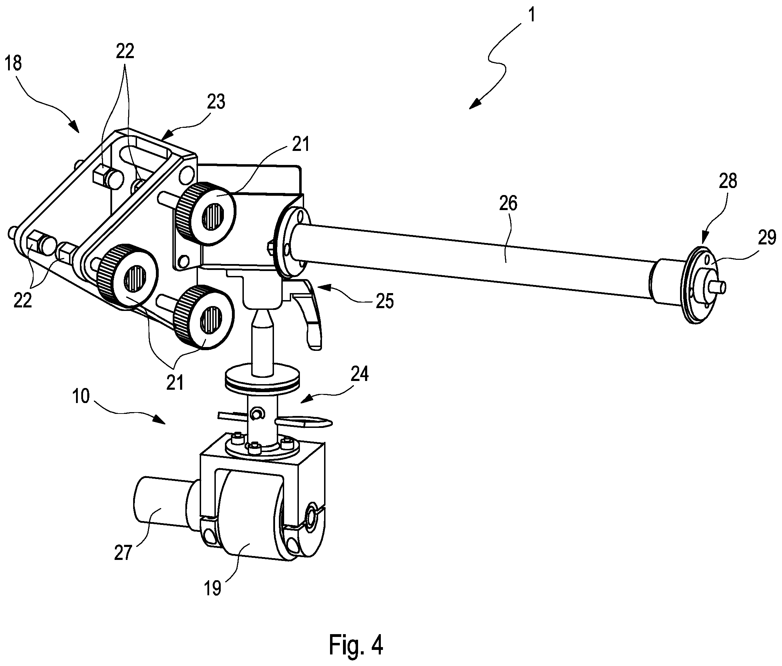

In Figur 4 ist ein viertes Ausführungsbeispiel einer erfindungsgemäßen Vorrichtung 1, die grundsätzlich vergleichbar zur Vorrichtung gemäß Figur 3 verwendet wird, weshalb auf die diesbezüglichen Erläuterungen der Verwendung verwiesen und im Folgenden lediglich auf die Besonderheiten der Struktur der Vorrichtung 1 gemäß Figur 4 eingegangen wird.

Das Klemmelement 18, mit dem die Vorrichtung 1 an der Eintrittskante einer Fanblade 83 befestigt werden kann, umfasst drei in einem Dreieck angeordnete Punktklemmen 21, deren jeweilige Klemmbacken 22 an gegenüberliegenden Seiten eines U-Profils 23 angeordnet sind.

Zwischen Klemmelement 18 und Reibrad 19 ist ein Federelement 24 vorgesehen, mit dem das Reibrad 19 bei Verwendung der Vorrichtung 1 an das Gehäuse 84 des Strahltriebwerks 80 angedrückt werden kann. Um dabei die Richtung der Anpresskraft einstellen zu können, ist zwischen Klemmelement 18 und Federelement 24 ein arretierbares Kugelgelenk 25 vorgesehen. Mit diesem Kugelgelenk 25 kann das Federelement 24 und somit das Reibrad 19 gegenüber dem Klemmelement 18 verschwenkt und so die Richtung der Anpresskraft des Reibrades 19 an das Gehäuse 84 des Strahltriebwerks 80 eingestellt werden.

Um eine kraftfreie Montage der Vorrichtung 1 zu ermöglichen, weist das Federelement 24 eine Fixierung 24' in Form eines Splints. Wird das Federelement 24 manuell komprimiert und anschließend die Fixierung 24' durch geeignete Öffnungen im Federelement 24 hindurchgesteckt, bleibt das Federelement 24 komprimiert, bis die Fixierung 24' wieder hinausgezogen wird. Die Vorrichtung 1 kann bei fixiertem Federelement 24 kraftfrei montiert werden. Die für die Verwendung erforderliche Anpresskraft des Reibrades 19 an das Gehäuse 84 des Strahltriebwerks 80 wird nach herausziehen der Fixierung 24' erreicht.

Die Vorrichtung 1 umfasst weiterhin eine Kabelführung 26 mit innen liegenden Kabeln zur Versorgung der Antriebseinheit 27 des Reibrades 19 mit elektrischer Energie sowie Datenleitungen für einen - innen liegenden und somit nicht sichtbaren - Winkelgeber. Am freien Ende der Kabelführung 26 ist eine Schleifringanordnung 28 mit unmittelbar daran angeordneter Kupplung 29 zum Anschluss einer externen Stromversorgung und externen Datenleitung vorgesehen. Die Schleifringanordnung 28 ermöglicht es, die Vorrichtung mit einer externen Stromquelle und/oder Steuerungseinheit zu betreiben, weshalb die Vorrichtung 1 selbst leicht und somit gut handhabbar sein kann.

## Patentansprüche

1. Vorrichtung (1) zum Antrieb einer Welle (81) eines Strahltriebwerks (80) zu Inspektionszwecken umfassend eine Antriebseinheit (10) mit einem Klemmelement (18) zur lösbaren und zerstörungsfreien Befestigung der Antriebseinheit (10) an einem an der Welle (81) angeordneten Fanblade (83) des Strahltriebwerks (80) und einem durch die Antriebseinheit (10) angetriebenen Reibrad (19), welches zum Anliegen an das Gehäuse (84) des Strahltriebwerks (80) ausgebildet ist, wobei ein Federelement (24) zum Andrücken des Reibrades (19) an das Gehäuse (84) des Strahltriebwerks (80) vorgesehen ist, **dadurch gekennzeichnet, dass** zwischen Klemmelement (18) und Federelement ein arretierbares Kugelgelenk zur Einstellung der relativen Lage von Klemmelement (18) und Federelement vorgesehen ist.

2. Vorrichtung nach Anspruch 1,
**dadurch gekennzeichnet, dass**
das Klemmelement (18) drei in einem Dreieck angeordnete Punktklemmen umfasst, deren jeweils zwei Klemmbacken vorzugsweise an gegenüberliegenden Seiten eines U-Profils angeordnet sind.

3. Vorrichtung nach einem der vorhergehenden Ansprüche,
**dadurch gekennzeichnet, dass**
das Federelement (24) für eine lastfreie Montage wahlweise im komprimierten Zustand fixierbar ist.

4. Vorrichtung nach einem der vorhergehenden Ansprüche,
**dadurch gekennzeichnet, dass**
die Vorrichtung (1) eine Kupplung zum Anschluss einer externen Stromversorgung aufweist.

5. Vorrichtung nach einem der vorhergehenden Ansprüche,
**dadurch gekennzeichnet, dass**
die Vorrichtung (1) einen Winkelgeber zur Ermittlung des Winkels der Antriebseinheit (10) gegenüber der Lotrechten aufweist, wobei vorzugsweise eine Steuerungseinheit (30) vorgesehen ist, die zum Anfahren einer vorgegebenen Winkelposition über die Antriebseinheit (10) ausgebildet ist.

## Claims

1. Device (1) for driving a shaft (81) of a jet engine (80) for inspection purposes, comprising a drive unit (10) having a clamping element (18) for releasable and non-destructive fastening of the drive unit (10) to a fan blade (83) of the jet engine (80) arranged on the shaft (81) and having a friction wheel (19) which is driven by the drive unit (10) and is designed for contact with the housing (84) of the jet engine (80), wherein a spring element (24) for pressing the friction wheel (19) against the housing (84) of the jet engine (80) is provided, **characterized in that** a lockable ball joint is provided between the clamping element (18) and the spring element for adjusting the relative position of the clamping element (18) and the spring element.

2. Device according to Claim 1,
**characterized in that**
the clamping element (18) comprises three point clamps arranged in a triangle, the respective two clamping jaws of which are preferably arranged on opposites sides of a U-shaped section.

3. Device according to one of the preceding claims,
**characterized in that**
the spring element (24) can be fixed selectively in the compressed state for load-free mounting.

4. Device according to one of the preceding claims,
**characterized in that**
the device (1) has a coupling for connecting an external power supply.

5. Device according to one of the preceding claims,
**characterized in that**
the device (1) has an angle transmitter for determining the angle of the drive unit (10) in relation to the perpendicular, wherein a control unit (30) is preferably provided which is configured for approaching a predefined angle position via the drive unit (10).

## Revendications

1. Dispositif (1) pour entraîner un arbre (81) d'un turboréacteur (80) à des fins d'inspection, comprenant une unité d'entraînement (10) avec un élément de serrage (18) pour la fixation amovible et non destructive de l'unité d'entraînement (10) sur une pale de ventilateur (83) du turboréacteur (80) agencée sur l'arbre (81) et une roue à friction (19) entraînée par l'unité d'entraînement (10), qui est réalisée pour s'appuyer contre le carter (84) du turboréacteur (80), un élément à ressort (24) étant prévu pour presser la roue à friction (19) contre le carter (84) du turboréacteur (80), **caractérisé en ce qu'**une articulation à rotule blocable est prévue entre l'élément de serrage (18) et l'élément à ressort pour régler la position relative de l'élément de serrage (18) et de l'élément à ressort.

2. Dispositif selon la revendication 1,
**caractérisé en ce que**
l'élément de serrage (18) comprend trois points de serrage agencés en un triangle, dont deux mâchoires de serrage sont agencées de préférence sur des côtés opposés d'un profilé en U.

3. Dispositif selon l'une quelconque des revendications précédentes,
**caractérisé en ce que**
l'élément à ressort (24) peut être fixé au choix à l'état comprimé pour un montage sans charge.

4. Dispositif selon l'une quelconque des revendications précédentes,
**caractérisé en ce que**
le dispositif (1) présente un accouplement pour raccorder une alimentation électrique externe.

5. Dispositif selon l'une quelconque des revendications précédentes,
**caractérisé en ce que**
le dispositif (1) présente un capteur d'angle pour déterminer l'angle de l'unité d'entraînement (10) par rapport à la verticale, une unité de commande (30) étant de préférence prévue, qui est réalisée pour atteindre une position angulaire prédéfinie par l'intermédiaire de l'unité d'entraînement (10).
